# EUROPEAN PATENT SPECIFICATION

(11) **EP 2 245 934 B1**
(45) Date of publication and mention of the grant of the patent: **06.07.2016**
(21) Application number: 10164241.1
(22) Date of filing: 02.09.2008
(51) Int. Cl.: A01N 43/40, A01N 3/00, A01N 3/02, A23B 7/154, A01P 3/00

(54) **Post-harvest treatment**
Verarbeitung nach der Ernte
Traitement après récolte

(30) Priority: 12.09.2007 EP 07116248
(43) Date of publication of application: 03.11.2010
(62) Divisional of application: 08785786.8
(73) Proprietor: Bayer Intellectual Property GmbH, 40789 Monheim am Rhein (DE)
(72) Inventor: Häuser-Hahn, Isolde, Dr., 51375 Leverkusen (DE); Davies, Peter, Howard, Muntinlupa City (PH); Wachendorff-Neumann, Ulrike, Dr., 56566 Neuwied (DE); Kirsch, Klaus, Dr., 04779-900 Sao Paulo (BR); Ebbinghaus, Dirk, Dr., 42119 Wuppertal (DE)
(74) Representative: BIP Patents

(56) References cited:
- EP-A1- 1 389 614
- WO-A2-2004/016088
- WO-A2-2005/074684
- J M GOUOT: "Field efficacy of Profiler , a fluopicolide and fosetyl-Al fungicide combination for the control of grape downy mildew (Plasmopara viticola)", PFLANZENSCHUTZ-NACHRICHTEN BAYER, vol. 59, no. 2-3, 1 January 2006 (2006-01-01), pages 293-302, XP55042422,
- BLACHARSKI R ET AL: "The Effect of Preharvest Fungicide Applications on Control of Postharvest Disease", INTERNET CITATION, 1 January 1999 (1999-01-01), pages 1-2, XP002536551,
- C LEAKE ET AL: "The human and environmental safety aspects of fluopicolide", PFLANZENSCHUTZ-NACHRICHTEN BAYER, vol. 59, no. 2-3, 1 January 2006 (2006-01-01), pages 201-208, XP55042423,
- B. V. Sallato ET AL: "Effect of boscalid on postharvest decay of strawberry caused by Botrytis cinerea and Rhizopus stolonifer", Spanish Journal of Agricultural Research, vol. 5, no. 1, 1 March 2007 (2007-03-01), pages 67-78, XP055172989, ISSN: 1695-971X, DOI: 10.5424/sjar/2007051-224

## Description

The present invention relates to methods for the protection of harvested fruit, cutflowers or vegetables against decay caused by certain storage diseases or disorders expressed in storage conditions. In particular the invention relates to the application of certain fungicidal active compounds to protect harvested fruit, cutflowers or vegetables against phytopathogenic fungi.

The purpose of any pre-harvest plant protection program for fruit, cutflowers and vegetables is to prevent the development of diseases that might impair the final quality of the fruit, cutflowers and vegetables and to obtain adequate production yields. The system for post-harvest application of plant protection products on fruit, cutflowers and vegetables during packing aims to safeguard the health of the fruit and vegetables during the period of storage and transport to the final consumer in the countries in the northern hemisphere.

To date, for example, only few techniques have been used for preventing the disease *Botrytis cinerea,* and their common denominator is gassing with sulphur dioxide (SO₂). Gassing with SO₂ only controls the disease *Botrytis cinerea* at the time of application - it does not have a residual effect. With this traditional treatment based on SO₂ gassing, e.g. grapes can be maintained in acceptable conditions for a period of 30 days. However, fruit exporters are looking for alternatives to provide storage in good conditions for a period of 45 to 90 days. This would enable them to plan exports with a broader time spread, making it possible to obtain better prices and greater trading profitability.

It is already known that several fungicidal active compounds can be used to prevent post-harvest damages of fruit or vegetables. EP-A 0 972 4450 relates to a method for treatment of fruit and vegetables in post-harvest conditions for the purpose of achieving their preservation; the method comprises cooling the fruit to the core and then treating it with a shower consisting of an aqueous composition for treatment by immersion, preliminary treatment of the aqueous composition with fungicide by means of thiabendazole, a terpene compound, 2-phenylphenol and its salts and enilconazole, at a temperature from 40 to 60°C.

Furthermore, the use of a new system of post-harvest application of plant protection products is known from WO 2007/009474, where post-harvest electrostatic spraying of fungicides, in particular of fenhexamid is disclosed.

Also imazalil, fludioxonil and pyrimethanil are already known for post-harvest treatment (cf. WO 2005/074684, Journal of Agricultural Food Chemistry 2007, 55, 825-831 and Postharvest Biology and Technology 2006, 42, 75-85).

WO 2004/016088 A2 and EP 1 389 614 A1 disclose the use of certain 2-pyridylethylbenzamide derivatives, including Fluopyram, against a wide range of fungi. The compounds are useful to treat propagation material such as tubers or rhizomes, but also seeds, seedlings or seedlings pricking out and plants or plants pricking out. Post-harvest treatment is not mentioned.

From J. M. GOUOT: "Field efficacy of Profiler, a fluopicolide and fosetyl-AI fungicide combination for the control of grape downy mildew (Plasmopara viticola)", Pflanzenschutz-Nachrichten Bayer, vol. 59, no. 2-3, January 2006, pages 293-302 it is known to use compositions comprising a fluopicolide and fosetyl-AI fungicide combination for the control of grape downy mildew. Neither use of fluopyram, nor post-harvest treatment of harvested grapes is mentioned.

R. BLACHARSKI et al. disclose in "The Effect of Preharvest Fungicide Applications on Control of Postharvest Disease", Internet Citation, 1 January 1999, pages 1-2 protection of strawberries against Botrytis fruit rot by preharvest application of Captan, Thiram and/or Rovral.

C. LEAKE et al. disclose in "The human and environmental safety aspects of fluopicolide" Pflanzenschutz-Nachrichten Bayer, vol. 59, no. 2-3, January 2006, pages 201-208 particular advantages of fluopicolide. The fungicide is said to be characterized by a favorable profile regarding toxicology, residues and consumer exposure, environmental fate and behavior as well as a good ecotoxicological profile. Nothing is said about post-harvest application of fluopicolide.

WO 2005/074684 A2 relates to synergistic antifungal compositions comprising didecyl ammonium chloride and a post-harvest antifungal agent selected from the group consisting of imazalil, boscalid, fenhexamid, pyrimethanil, thiophanatemethyl, triflumizole, azoxystrobin, dimoxystrobin, picoxystrobin, and pyraclostrabin for protecting plants, fruit or seeds against phytopathogenic fungi. Such compositions are active against a broad range of fungi.

B. V. Sallato et al. disclose in "Effect of boscalid on postharvest decay of strawberry caused by Botrytis cinerea and Rhizopus stolonifer", Spanish Journal of Agricultural Research, vol. 5, no. 1, March 2007, pages 67-78, the preharvest and postharvest treatment of strawberries with boscalid to protect the strawberries against storage decays.

Since, moreover, the environmental and economic requirements imposed on modern-day fungicides are continually increasing, with regard, for example, to the spectrum of activity, toxicity, selectivity, application rate, formation of residues, and favorable preparation ability, and since, furthermore, there may be problems, for example, with resistances developing to known active compounds, a constant task is to develop new fungicide agents which in some areas at least have advantages over their known counterparts. Therefore, there is still a need to find and/or develop other fungicides for post-harvest treatment.

It has now been found, surprisingly, that certain known fungicides may be used for post-harvest treatment of fruit and vegetables for the treatment of post-harvest and/or storage diseases. The invention furthermore relates to a method of combating certain post-harvest and/or storage diseases by treatment of fruit, cutflowers or vegetables infested with these diseases by certain fungicides or mixtures thereof.

The fungicides are highly active against a broad spectrum of storage diseases with low application rates reducing the risk for workers and meeting the demand for quality and safe food covering residues. The plant compatibility is very good that is no damage to the outer surface or soft tissue of fruit and vegetables have been observed under various storage conditions with different controlled atmosphere systems in respect to temperature and humidity. In contrast, the visual appeal of the fruit was enhanced. The fungicidal properties of the compounds enable their use in different application systems like dipping, drenching, dump tank, spraying, fogging, brushing, packaging and coatings like wax and electrostatic and other targeted applications.

Another advantage is that while using the fungicides the control of post-harvest and/or storage diseases is achieved for a longer period to allow transport of the harvested fruit or vegetables over long distances.

Accordingly, the present invention relates to the use of at least one fungicide selected from fluopyram [(N-{2-[3-chloro-5-(trifluoromethyl)pyridin-2-yl]ethyl}-2-(trifluoromethyl)benzamide)] and salts thereof, for post-harvest treatment of fruit, cutflowers or vegetables to protect harvested fruit, cutflowers or vegetables against post-harvest and storage diseases.

The invention furthermore relates to a method of combating post-harvest and/or storage diseases by treating the fruit, cutflowers or vegetables with at least one fungicide selected from fluopyram [(N-{2-[3-chloro-5-(trifluoromethyl)pyridin-2-yl]ethyl}-2-(trifluoromethyl)benzamide)] and salts thereof, after the fruit, cutflowers and vegetables have been harvested.

Within this application "post-harvest treatment" is to be understood in a very broad sense. On the one hand it means literally the treatment of fruit or vegetables after the fruit and vegetables have been harvested. For post-harvest treatment the fruit or vegetable is treated with (e.g. with using the method and apparatus disclosed in WO 2005/009474), dipped or tank dumped or drenched into a liquid, brushed with, fumigated, painted, fogged (warm or cold), or the fruit may be coated with a waxy or other composition.

According to the invention, post-harvest and storage diseases may be caused for example by the following fungi:
Colletotrichum spp., e.g. Colletotrichum musae, Colletotrichum gloeosporioides, Colletotrichum coccodes; Fusarium spp., e.g. Fusarium semitectum, Fusarium moniliforme, Fusarium solani, Fusarium oxysporum; Verticillium spp., e.g. Verticillium theobromae; Nigrospora spp.; Botrytis spp., e.g. Botrytis cinerea; Geotrichum spp., e.g. Geotrichum candidum; Phomopsis spp., Phomopsis natalensis; Diplodia spp., e.g. Diplodia citri; Alternaria spp., e.g. Alternaria citri, Alternaria alternata; Phytophthora spp., e.g. Phytophthora citrophthora, Phytophthora fragariae, Phytophthora cactorum, Phytophthora parasitica; Septoria spp., e.g. Septoria depressa; Mucor spp., e.g. Mucor piriformis; Monilinia spp., e.g. Monilinia fructigena, Monilinia laxa; Venturia spp., e.g. Venturia inaequalis, Venturia pyrina; Rhizopus spp., e.g. Rhizopus stolonifer, Rhizopus oryzae; Glomerella spp., e.g. Glomerella cingulata; Sclerotinia spp., e.g. Sclerotinia fruiticola; Ceratocystis spp., e.g. Ceratocystis paradoxa; Penicillium spp., e.g. Penicillium funiculosum, Penicillium expansum, Penicillium digitatum, Penicillium italicum; Gloeosporium spp., e.g. Gloeosporium album, Gloeosporium perennans, Gloeosporium fructigenum, Gloeosporium singulata; Phlyctaena spp., e.g. Phlyctaena vagabunda; Cylindrocarpon spp., e.g. Cylindrocarpon mali; Stemphyllium spp., e.g. Stemphyllium vesicarium; Phacydiopycnis spp., e.g. Phacydiopycnis malirum; Thielaviopsis spp., e.g. Thielaviopsis paradoxy; Aspergillus spp., e.g. Aspergillus niger, Aspergillus carbonarius; Nectria spp., e.g. Nectria galligena; Pezicula spp.

According to the invention, post-harvest storage disorders are for example scald, scorch, softening, senescent breakdown, lenticel spots, bitter pit, browning, water core, vascular breakdown, CO₂ injury, CO₂ deficiency and O₂ deficiency.

Fruit, cutflower and vegetables to be treated according to the invention are particularly selected from cereals, e.g. wheat, barley, rye, oats, rice and sorghum; beets, e.g. sugar beet and fodder beet; pome and stone fruit and berries, e.g. apples, pears, plums, peaches, almonds, cherries, strawberries, raspberries and blackberries; leguminous plants, e.g. beans, lentils, peas, soy beans; oleaginous plants, e.g. rape, mustard, poppy, olive, sunflower, coconut, castor-oil plant, cocoa, ground-nuts; cucurbitaceae, e.g. pumpkins, gherkins, melons, cucumbers, squashes; fibrous plants, e.g. cotton, flax, hemp, jute; citrus fruit, e.g. orange, lemon, grapefruit, mandarin; tropical fruit, e.g. papaya, passion fruit, mango, carambola, pineapple, banana; vegetables, e.g. spinach, lettuce, asparagus, brassicaceae such as cabbages and turnips, carrots, onions, tomatoes, potatoes, hot and sweet peppers; avocado, cinnamon, camphor tree; or plants such as maize, tobacco, nuts, coffee, sugar-cane, tea, grapevines, hops, rubber plants, as well as ornamental plants, e.g. cutflowers, roses, gerbera and flower bulbs, shrubs, deciduous trees and evergreen trees such as conifers. This enumeration of culture plants is given with the purpose of illustrating the invention and not to delimiting it thereto.

Particularly preferred is the treatment of pome and stone fruit and berries, in particular apples, pears, plums, peaches, almonds, cherries, strawberries, raspberries and blackberries.
Particularly preferred is the treatment of citrus fruit, in particular orange, lemon, grapefruit, mandarin.
Particularly preferred is the treatment of tropical fruit, in particular papaya, passion fruit, mango, carambola, pineapple, banana.
Particularly preferred is the treatment of grapevines.

The fungicides mentioned above are all known compounds (cf. e.g. The Pesticide Manual, 13th Edition, British Crop Protection Council, 2003).

The fungicides used according to the invention are generally applied in form of a composition comprising at least one fungicide as mentioned above. Preferably the fungicidal composition comprises agriculturally acceptable additives, solvents, carriers, surfactants, or extenders.

According to the invention, the term "carriers" denotes a natural or synthetic, organic or inorganic compound with which the active compounds are combined or associated to make it easier to apply, notably to the fruit and vegetables treated according to the invention. This support is thus preferably inert and should be at least agriculturally acceptable. The support may be a solid or a liquid.

Suitable solid carriers are the following: e.g. ammonium salts and natural rock powders, such as kaolins, clays, talcum, chalk, quartz, attapulgite, montmorillonite or diatomaceous earth and synthetic rock powders such as highly disperse silica, aluminium oxide and silicates, oil waxes, solid fertilizers, water, alcohols, preferably butanol, organic solvents, mineral and vegetable oils and essential oils and derivatives thereof; mixtures of such carriers may also be used; suitable solid carriers for granules are: for example crushed and fractionated natural rocks such as calcite, marble, pumice, sepiolite, dolomite and synthetic granules of inorganic and organic powders and granules of organic materials such as paper, sawdust, coconut shells, corn stalks and tobacco stalks; suitable emulsifiers and/or foam-forming agents are: for example non-ionic and anionic emulsifiers, such as polyoxyethylene fatty acid esters, polyoxyethylene fatty alcohol ethers, suitable dispersants are non-ionic and/or ionic substances, for example from the classes comprising alcohol POE and/or POP ethers, acid and/or POP or POE esters, alkyl-aryl and/or POP or POE ethers, fatty and/or POP-POE adducts, POE and/or POP polyol derivatives, POE and/or POP/sorbitan or sugar adducts, alkyl or aryl sulphates, sulphonates and phosphates or the corresponding PO ether adducts. Furthermore, suitable oligomers or polymers, for example based on vinyl monomers, acrylic acid, EO and/or PO alone or in combination with for example (poly-)alcohols or (poly-)amines. Use can also be made of acetic acid, peracetic acid, salicylic acid, acetaldehyde, phosphorous acid, lignin and sulphonic acid derivatives thereof, simple and modified celluloses, aromatic and/or aliphatic sulphonic acids, aromatic and/or aliphatic salicylic acids and adducts thereof with formaldehyde. Suitable as dispersants are for example lignosulphite waste liquors and methylcellulose.

By liquefied gaseous diluents or supports are meant such liquids that are gaseous at normal temperature and under normal pressure, for example, aerosol propellants such as halo hydrocarbons as well as butane, propane, nitrogen and carbon dioxide.

It is possible to use in the formulations adhesives such as carboxymethylcellulose, natural and synthetic powdered, granular or latex-like polymers such as gum arabic, polyvinyl alcohol, polyvinyl acetate and natural phospholipids, such as cephalins and lecithins and synthetic phospholipids. Further additives can be mineral or vegetable oils and waxes, optionally modified.

Suitable extenders are, for example, water, polar and non-polar organic chemical liquids, for example from the classes of the aromatic and non-aromatic hydrocarbons (such as paraffins, alkylbenzenes, alkylnaphthalenes, chlorobenzenes), the alcohols and polyols (which, if appropriate, may also be substituted, etherified and/or esterified), the ketones (such as acetone, cyclohexanone), esters (including fats and oils) and (poly)ethers, the unsubstituted and substituted amines, amides, lactams (such as *N-*alkylpyrrolidones) and lactones, the sulphones and stilphoxides (such as dimethyl sulphoxide).

If the extender used is water, it is also possible to employ, for example, organic solvents as auxiliary solvents. Essentially, suitable liquid solvents are: aromatics such as xylene, toluene or alkylnaphthalenes, chlorinated aromatics and chlorinated aliphatic hydrocarbons such as chlorobenzenes, chloroethylenes or methylene chloride, aliphatic hydrocarbons such as cyclohexane or paraffins, for example petroleum fractions, mineral and vegetable oils, alcohols such as butanol or glycol and also their ethers and esters, ketones such as acetone, methyl ethyl ketone, methyl isobutyl ketone or cyclohexanone, strongly polar solvents such as dimethyl sulphoxide, and also water.

The composition may also comprise additional components. In particular, the composition may further comprise a surfactant. The surfactant can be an emulsifier, a dispersing agent or a wetting agent of ionic or non-ionic type or a mixture of such surfactants. Mention may be made, for example, of polyacrylic acid salts, lignosulphonic acid salts, phenolsulphonic or naphthalenesulphonic acid salts, polycondensates of ethylene oxide with fatty alcohols or with fatty acids or with fatty amines, substituted phenols (in particular alkylphenols or arylphenols), salts of sulphosuccinic acid esters, taurine derivatives (in particular alkyl taurates), phosphoric esters of polyoxyethylated alcohols or phenols, fatty acid esters of polyols, and derivatives of the present compounds containing sulphate, sulphonate and phosphate functions, for example alkylaryl polyglycol ethers, alkyl sulphonates, alkyl sulphates, aryl sulphonates, protein hydrolyzates, lignosulphite waste liquors and methyl cellulose. The presence of at least one surfactant is generally essential when the active compound and / or the inert support are water-insoluble and when the vector agent for the application is water. Preferably, surfactant content may be comprised from 5% to 40% by weight of the composition.

Colouring agents such as inorganic pigments, for example iron oxide, titanium oxide, ferrocyanblue, and organic pigments such as alizarin, azo and metallophthalocyanine dyes, and trace elements such as iron, manganese, calcium, magnesium, boron, copper, cobalt, molybdenum and zinc salts can be used.

Optionally, other additional components may also be included, e.g. protective colloids, adhesives, thickeners, thixotropic agents, penetration agents, stabilisers, sequestering agents. More generally, the active compounds can be combined with any solid or liquid additive, which complies with the usual formulation techniques.

In general, the composition used according to the invention may contain from 0.05 to 99% by weight of active compounds, preferably from 1 to 70% by weight, particularly preferably from 10 to 50 % by weight.

The compositions used according to the invention can be used as such, in form of their formulations or as the use forms prepared therefrom, such as aerosol dispenser, capsule suspension, cold fogging concentrate, hot fogging concentrate, encapsulated granule, fine granule, ready-to-use solutions, dustable powder, emulsifiable concentrate, emulsion oil in water, emulsion water in oil, macrogranule, microgranule, oil dispersible powder, oil miscible flowable concentrate, oil miscible liquid, froths, paste, suspension concentrate (flowable concentrate), suspensions-emulsions-concentrates, soluble concentrate, suspensions, soluble powder, granule, water soluble granules or tablets, wettable powder, natural and synthetic materials impregnated with active compound, as well as ULV- cold and hot fogging formulations, gas (under pressure), gas generating product, plant rodlet, ultra low volume (ULV) liquid, ultra low volume (ULV) suspension, water dispersible granules or tablets, water dispersible powder for slurry treatment.

These formulations are prepared in a known manner by mixing the active compounds or active compound combinations with customary additives, such as, for example, customary extenders and also solvents or diluents, emulsifiers, dispersants, and/or bonding or fixing agent, wetting agents, water repellents, if appropriate siccatives and UV stabilisers, colorants, pigments, defoamers, preservatives, secondary thickeners, adhesives, gibberellins and water as well further processing auxiliaries.

These compositions include not only compositions which are ready to be applied by means of a suitable device, such as a spraying or dusting device, but also concentrated commercial compositions which must be diluted before application.

The active compounds used according to the invention can be used in its commercially available formulations and in the use forms, prepared from these formulations, as a mixture with other active compounds, such as insecticides, attractants, sterilizing agents, bactericides, acaricides, nematicides, fungicides, growth-regulating substances, herbicides, safeners, fertilizers or semiochemicals.

The treatment of the fruit, cutflowers or vegetables with the active compound according to the invention is carried out by means of the normal treatment methods, for example by watering (drenching), drip irrigation, spraying, vaporizing, atomizing, broadcasting, dusting, foaming, spreading-on, and as a powder.

The dose of active compound/application rate usually applied in the method of treatment according to the invention is generally and advantageously from 0,005 to 70 % by weight, preferably from 0,01 to 20 % by weight, more preferably from 0,05 to 10 % by weight, depending on the type of formulation to be selected for specific application purposes.

The doses herein indicated are given as illustrative examples of the method according to the invention. A person skilled in the art will know how to adapt the application doses, notably according to the nature of the fruit, cutflower or vegetable to be treated.

### Examples

In Example 1 and Example 2 all compounds except Fluopyram were applied as commercially available. 1 weight proportion of Fluopyram, however, was mixed with solvents (24.5 w/w acetone, 24.5 w/w dimethylacetamid) and emulsifier (1 w/w), respectively. Afterwards, the product was diluted in water. The concentration used is indicated below.

### Example 1

Apples were dipped in a fungicidal solution and kept in plastic boxes for drying. Afterwards 10 µl of a spore solution of *Penicillium expansum* has been applied to injuries of the cuticle of the fruits. The trial has been assessed at different time intervals after inoculation. The efficacy of the products has been calculated based on the fungal growth of the treated apples with reference to the inoculated untreated control. The efficacy is shown as % Abbott.

**Table 1a)**

| Compound | Dosage | % Efficacy [Abbott] at | | |
|---|---|---|---|---|
| | | 6d | 10d | 14d |
| Tebuconazole* [Folicur EW250] | 100g a.i./1000 ltr. | 100 | 100 | 100 |
| untreated control | [% infestation] | [17] | [37] | [53] |

| | | | | |
|---|---|---|---|---|
| *indicates reference examples. | | | | |

**Table 1b)**

| Compound | Dosage | % Efficacy [Abbott] at | | |
|---|---|---|---|---|
| | | 6d | 10d | 15d |
| Trifloxystrobin* [Flint WG50] | 50g a.i./1000 ltr. | 50 | 63 | 52 |
| Fluopyram | 100g a.i./1000 ltr. | 93 | 90 | 70 |
| Tolylfluanid* [Euparen M WG50] | 750g a.i./1000 ltr. | 64 | 60 | 60 |
| untreated control | [% infestation] | [23] | [50] | [83] |

| | | | | |
|---|---|---|---|---|
| *indicates reference examples. | | | | |

### Example 2

Apples were dipped in a fungicidal solution and kept in plastic boxes for drying. Afterwards 10µl of a spore solution of *Botrytis cinerea* has been applied to injuries of the cuticle of the fruits. The trial has been assessed at 6d and 10d after inoculation. The efficacy of the products has been calculated based on the fungal growth of the treated apples with reference to the inoculated untreated control. The efficacy is shown as % Abbott.

**Table 2**

| Compound | Dosage | % Efficacy [Abbott] at | |
|---|---|---|---|
| | | 6d | 10d |
| Fluopyram | 100g a.i./1100 ltr, | 98 | 96 |
| untreated control | [% infestation] | [70] | [90] |

### Example 3: In vitro Test for the ED₅₀ determination of microorganisms

Cavities of a 96-hole microtiter plates are filled with 10 µl of a solution of test compounds in methanol together with the emulsifier tris (1-phenylethyl)phenol-16-ethoxylate ("PSI6"). At the next step, into each cavity 200 µl of liquid potato dextrose medium is pipetted amended with an appropriate concentration of spores or mycelial suspension of the test fungus.

The resulting concentrations of the test compounds in the microtiter cavity are ranging from 50, 5, 0.5 and 0.05 ppm.

The extinction in all cavities is measured by a spectral photometer. The microtiter plates are then transferred for 3-5 days (depending on the fungal growth) onto a shaker at 20°C and 80 % relative humidity. At the end of the incubation time the growth of the test organisms is measured again photometrically to determine the fungal growth. From the resulting dose-response curves the ED₅₀ will be taken. The concentration that is necessary to give 50 % growth inhibition is defined and reported as ED₅₀ value (= Effective Dose that causes 50 % growth inhibition) in ppm (= mg/l).

Examples with trifloxystrobin, pyrimethanil, tebuconazole, bixafen and kresoxim methyl are given as reference examples.

**Table 3: In vitro Test for the ED₅₀ determination of microorganisms**

| Microorganism | Active compound | ED₅₀ |
|---|---|---|
| Aspergillus carbonarius | Trifloxystrobin | < 0,1 ppm |
| | Pyrimethanil | < 0,1 ppm |
| | Tebuconazole | < 0,1 ppm |
| Aspergillus ochraceus | Trifloxystrobin | < 0,1 ppm |
| Aspergillus niger | Trifloxystrobin | < 0,1 ppm |
| | Fluopyram | < 0,1 ppm |
| | Bixafen | < 0,1 ppm |
| Botrytis cinerea | Trifloxystrobin Bixafen | 0,4 ppm |
| | | < 0,1 ppm |
| | | < 0,1 ppm |
| | | < 0,1 ppm |
| Monilia spp. | Trifloxystrobin | 0,72 ppm |
| Penicillium verrucosum | Trifloxystrobin | < 0,1 ppm |
| | Kresoxim methyl | 1,5 ppm |
| | Bixafen | < 0,1 ppm |
| | Fluopyram | < 0,1 ppm |
| | Pyrimethanil | 0,13 ppm |

## Claims

1. Use of at least one fungicide, selected from fluopyram [(N-{2-[3-chloro-5-(trifluorome-thyl)pyridin-2-yl]ethyl}-2-(trifluoromethyl)benzamide)] and salts thereof,
for post-harvest treatment of fruit, cutflowers or vegetables to protect harvested fruit, cutflowers or vegetables against post-harvest and/or storage diseases.

2. Use according to Claim 1, **characterized in that** post-harvest and/or storage diseases are caused by the fungi selected from
Colletotrichum spp., Fusarium spp., Verticillium spp., Nigrospora spp.; Botrytis spp., Geotrichum spp., Phomopsis spp., Diplodia spp., Alternaria spp., Phytophthora spp., Septoria spp., Mucor spp., Monilinia spp., Venturia spp., Rhizopus spp., Glomerella spp., Sclerotinia spp., Ceratocystis spp., Penicillium spp., Gloeosporium spp., Phlyctaena spp., Cylindrocarpon spp., Stemphyllium spp., Phacydiopycnis spp., Thielaviopsis spp., Aspergillus spp., Nectria spp., Pezicula spp.

3. Use according to Claims 1 or 2, **characterized in that** post-harvest and storage diseases are caused by the fungi selected from
Colletotrichum musae, Colletotrichum gloeosporioides, Colletotrichum coccodes; Fusarium semitectum, Fusarium moniliforme, Fusarium solani, Fusarium oxysporum; Verticillium theobromae; Nigrospora spp.; Botrytis cinerea; Geotrichum candidum; Phomopsis natalensis; Diplodia citri; Alternaria citri, Alternaria alternata; Phytophthora citrophthora, Phytophthora fragariae, Phytophthora cactorum, Phytophthora parasitica; Septoria depressa; Mucor piriformis; Monilinia fructigena, Monilinia laxa; Venturia inaequalis, Venturia pyrina; Rhizopus stolonifer, Rhizopus oryzae; Glomerella cingulata; Sclerotinia fruiticola; Ceratocystis paradoxa; Penicillium funiculosum, Penicillium expansum, Penicillium digitatum, Penicillium italicum; Gloeosporium album, Gloeosporium perennans, Gloeosporium fructigenum, Gloeosporium singulata; Phlyctaena vagabunda; Cylindrocarpon mali; Stemphyllium vesicarium; Phacydiopycnis malirum; Thielaviopsis paradoxy; Aspergillus niger, Aspergillus carbonarius; Nectria galligena; Pezicula spp.

4. Use according to any of Claims 1 to 3, **characterized in that** fruit and vegetables are selected from cereals, beets, pome and stone fruit and berries, leguminous plants, oleaginous plants, cucurbitaceae, fibrous plants, citrus fruit, tropical fruit, vegetables, brassicaceae, avocado, cinnamon, camphor tree, or maize, tobacco, nuts, coffee, sugar-cane, tea, grapevines, hops, rubber plants, as well as ornamental plants, shrubs, deciduous trees and evergreen trees.

5. Use according to any of Claims 1 to 4, **characterized in that** fruit and vegetables are selected from wheat, barley, rye, oats, rice, sorghum, sugar beet, fodder beet, apples, pears, plums, peaches, almonds, cherries, strawberries, raspberries, blackberries, beans, lentils, peas, soy beans, rape, mustard, poppy, olive, sunflower, coconut, castor-oil plant, cocoa, ground-nuts, pumpkins, gherkins, melons, cucumbers, squashes, cotton, flax, hemp, jute, orange, lemon, grapefruit, mandarin, papaya, passion fruit, mango, carambola, pineapple, banana, spinach, lettuce, asparagus, cabbages, turnips, carrots, onions, tomatoes, potatoes, hot and sweet peppers, avocado, cinnamon, camphor tree, maize, tobacco, nuts, coffee, sugar-cane, tea, grapevines, hops, rubber plants, cutflowers, roses, gerbera and flower bulbs, shrubs, conifers.

6. Use according to any of Claims 1 to 5, **characterized in that** fruit and vegetables are selected from pome and stone fruit and berries, in particular apples, pears, plums, peaches, almonds, cherries, strawberries, raspberries and blackberries, citrus fruit, in particular orange, lemon, grapefruit, mandarin, tropical fruit, in particular papaya, passion fruit, mango, carambola, pineapple, banana and of grapevines.

7. Method of combating post-harvest and/or storage diseases by treating the fruit, cutflowers or vegetables with at least one fungicide selected from fluopyram [(N-{2-[3-chloro-5-(trifluoromethyl)pyridin-2-yl]ethyl}-2-(trifluoromethyl)benzamide)] and salts thereof,
after the fruit, cutflowers and vegetables have been harvested.

8. Method according to Claim 7, **characterized in that** diseases are caused by the fungi selected from Colletotrichum spp., Fusarium spp., Verticillium spp., Nigrospora spp.; Botrytis spp., Geotrichum spp., Phomopsis spp., Diplodia spp., Alternaria spp., Phytophthora spp., Septoria spp., Mucor sppMonilinia spp., Venturia spp., Rhizopus spp., Glomerella spp., Sclerotinia spp., Ceratocystis spp., Penicillium spp., Gloeosporium spp., Phlyctaena spp., Cylindrocarpon spp., Stemphyllium spp., Phacydiopycnis spp., Thielaviopsis spp., Aspergillus spp., Nectria spp., Pezicula spp.

9. Method according to Claim 7 or 8, **characterized in that** diseases are caused by the fungi selected from Colletotrichum musae, Colletotrichum gloeosporioides, Colletotrichum coccodes; Fusarium semitectum, Fusarium moniliforme, Fusarium solani, Fusarium oxysporum; Verticillium theobromae; Nigrospora spp.; Botrytis cinerea; Geotrichum candidum; Phomopsis natalensis; Diplodia citri; Alternaria citri, Alternaria alternata; Phytophthora citrophthora, Phytophthora fragariae, Phytophthora cactorum, Phytophthora parasitica; Septoria depressa; Mucor piriformis; Monilinia fructigena, Monilinia laxa; Venturia inaequalis, Venturia pyrina; Rhizopus stolonifer, Rhizopus oryzae; Glomerella cingulata; Sclerotinia fruiticola; Ceratocystis paradoxa; Penicillium funiculosum, Penicillium expansum, Penicillium digitatum, Penicillium italicum; Gloeosporium album, Gloeosporium perennans, Gloeosporium fructigenum, Gloeosporium singulata; Phlyctaena vagabunda; Cylindrocarpon mali; Stemphyllium vesicarium; Phacydiopycnis malirum; Thielaviopsis paradoxy; Aspergillus niger, Aspergillus carbonarius; Nectria galligena; Pezicula spp.

10. Method according to any of Claims 7 to 9, **characterized in that** fruit and vegetables are selected from cereals, beets, pome and stone fruit and berries, leguminous plants, oleaginous plants, cucurbitaceae, fibrous plants, citrus fruit, tropical fruit, vegetables, brassicaceae, avocado, cinnamon, camphor tree, or maize, tobacco, nuts, coffee, sugar-cane, tea, grapevines, hops, rubber plants, as well as ornamental plants, shrubs, deciduous trees and evergreen trees.

11. Method according to any of Claims 7 to 10, **characterized in that** fruit and vegetables are selected from wheat, barley, rye, oats, rice, sorghum, sugar beet, fodder beet, apples, pears, plums, peaches, almonds, cherries, strawberries, raspberries, blackberries, beans, lentils, peas, soy beans, rape, mustard, poppy, olive, sunflower, coconut, castor-oil plant, cocoa, ground-nuts, pumpkins, gherkins, melons, cucumbers, squashes, cotton, flax, hemp, jute, orange, lemon, grapefruit, mandarin, papaya, passion fruit, mango, carambola, pineapple, banana, spinach, lettuce, asparagus, cabbages, turnips, carrots, onions, tomatoes, potatoes, hot and sweet peppers, avocado, cinnamon, camphor tree, maize, tobacco, nuts, coffee, sugar-cane, tea, grapevines, hops, rubber plants, cutflowers, roses, gerbera and flower bulbs, shrubs, conifers.

12. Method according to any of Claims 7 to 11, **characterized in that** fruit and vegetables are selected from pome and stone fruit and berries, in particular apples, pears, plums, peaches, almonds, cherries, strawberries, raspberries and blackberries, citrus fruit, in particular orange, lemon, grapefruit, mandarin, tropical fruit, in particular papaya, passion fruit, mango, carambola, pineapple, banana and of grapevines.

## Patentansprüche

1. Verwendung von mindestens einem Fungizid, ausgewählt aus Fluopyram [(N-{2-[3-Chlor-5-(trifluormethyl)pyridin-2-yl]ethyl}-2-(trifluormethyl)benzamid)] und Salzen davon, zur Nachernte-Behandlung von Obst, Schnittblumen oder Gemüse zum Schutz von geerntetem Obst, Schnittblumen oder Gemüse vor Nachernte- und/oder Lagerkrankheiten.

2. Verwendung nach Anspruch 1, **dadurch gekennzeichnet, dass** die Nachernte- und/oder Lagerkrankheiten durch die Pilze verursacht werden, ausgewählt aus
Colletotrichum spp., Fusarium spp., Verticillium spp., Nigrospora spp., Botrytis spp., Geotrichum spp., Phomopsis spp., Diplodia spp., Alternaria spp., Phytophthora spp., Septoria spp., Mucor spp., Monilinia spp., Venturia spp., Rhizopus spp., Glomerella spp., Sclerotinia spp., Ceratocystis spp., Penicillium spp., Gloeosporium spp., Phlyctaena spp., Cylindrocarpon spp., Stemphyllium spp., Phacydiopycnis spp., Thielaviopsis spp., Aspergillus spp., Nectria spp., Pezicula spp.

3. Verwendung nach Anspruch 1 oder 2, **dadurch gekennzeichnet, dass** die Nachernte- und Lagerkrankheiten durch die Pilze verursacht werden, ausgewählt aus
Colletotrichum musae, Colletotrichum gloeosporioides, Colletotrichum coccodes; Fusarium semitectum, Fusarium moniliforme, Fusarium solani, Fusarium oxysporum; Verticillium theobromae; Nigrospora spp.; Botrytis cinerea; Geotrichum candidum; Phomopsis natalensis; Diplodia citri; Alternaria citri, Alternaria alternata; Phytophthora citrophthora, Phytophthora fragariae, Phytophthora cactorum, Phytophthora parasitica; Septoria depressa; Mucor piriformis; Monilinia fructigena, Monilinia laxa; Venturia inaequalis, Venturia pyrina; Rhizopus stolonifer, Rhizopus oryzae; Glomerella cingulata; Sclerotinia fruiticola; Ceratocystis paradoxa; Penicillium funiculosum, Penicillium expansum, Penicillium digitatum, Penicillium italicum; Gloeosporium album, Gloeosporium perennans, Gloeosporium fructigenum, Gloeosporium singulata; Phlyctaena vagabunda; Cylindrocarpon mali; Stemphyllium vesicarium; Phacydiopycnis malirum; Thielaviopsis paradoxy; Aspergillus niger, Aspergillus carbonarius; Nectria galligena; Pezicula spp.

4. Verwendung nach einem der Ansprüche 1 bis 3, **dadurch gekennzeichnet, dass** Obst und Gemüse ausgewählt sind aus Getreide, Rüben, Kern- und Steinobst und Beeren, Leguminosen, Ölpflanzen, Cucurbitaceae, Faserpflanzen, Zitrusfrucht, tropischer Frucht, Gemüse, Brassicaceae, Avocado, Zimt, Kampferbaum, oder Mais, Tabak, Nüssen, Kaffee, Zuckerrohr, Tee, Weinreben, Hopfen, Kautschukpflanzen sowie Zierpflanzen, Sträuchern, Laubbäumen und immergrünen Bäumen.

5. Verwendung nach einem der Ansprüche 1 bis 4, **dadurch gekennzeichnet, dass** Obst und Gemüse ausgewählt sind aus Weizen, Gerste, Roggen, Hafer, Reis, Sorghum, Zuckerrübe, Futterrübe, Äpfeln, Birnen, Pflaumen,
Pfirsichen, Mandeln, Kirschen, Erdbeeren, Himbeeren, Brombeeren, Bohnen, Linsen, Erbsen, Sojabohnen, Raps, Senf, Mohn, Olive, Sonnenblume, Kokosnuss, Rizinus, Kakao, Erdnüssen, Kürbissen, Gewürzgurken, Melonen, Salatgurken, Kürbisgewächsen, Baumwolle, Flachs, Hanf, Jute, Orange, Zitrone, Grapefruit, Mandarine, Papaya, Passionsfrucht, Mango, Karambole, Ananas, Banane, Spinat, Salat, Spargel, Kohl, Rüben, Karotten, Zwiebeln, Tomaten, Kartoffeln, scharfem und süßem Paprika, Avocado, Zimt, Kampferbaum, Mais, Tabak, Nüssen, Kaffee, Zuckerrohr, Tee, Weinreben, Hopfen, Kautschukpflanzen, Schnittblumen, Rosen, Gerbera und Blumenzwiebeln, Sträuchern, Koniferen.

6. Verwendung nach einem der Ansprüche 1 bis 5, **dadurch gekennzeichnet, dass** Obst und Gemüse ausgewählt sind aus Kern- und Steinobst und Beeren, insbesondere Äpfeln, Birnen, Pflaumen, Pfirsichen, Mandeln, Kirschen, Erdbeeren, Himbeeren und Brombeeren, Zitrusfrucht, insbesondere Orange, Zitrone, Grapefruit, Mandarine, tropischer Frucht, insbesondere Papaya, Passionsfrucht, Mango, Karambole, Ananas, Banane und Weinreben.

7. Verfahren zur Bekämpfung von Nachernte- und/oder Lagerkrankheiten durch Behandlung von Obst, Schnittblumen oder Gemüse mit mindestens einem Fungizid, ausgewählt aus Fluopyram [(N-{2-[3-Chlor-5-(trifluormethyl)pyridin-2-yl]ethyl}-2-(trifluormethyl)benzamid)] und Salzen davon,
nachdem das Obst, die Schnittblumen und das Gemüse geerntet wurden.

8. Verfahren nach Anspruch 7, **dadurch gekennzeichnet, dass** die Krankheiten durch die Pilze verursacht werden, ausgewählt aus Colletotrichum spp., Fusarium spp., Verticillium spp., Nigrospora spp., Botrytis spp.,
Geotrichum spp., Phomopsis spp., Diplodia spp., Alternaria spp., Phytophthora spp., Septoria spp., Mucor spp., Monilinia spp., Venturia spp., Rhizopus spp., Glomerella spp., Sclerotinia spp., Ceratocystis spp., Penicillium spp., Gloeosporium spp., Phlyctaena spp., Cylindrocarpon spp., Stemphyllium spp., Phacydiopycnis spp., Thielaviopsis spp., Aspergillus spp., Nectria spp., Pezicula spp.

9. Verfahren nach Anspruch 7 oder 8, **dadurch gekennzeichnet, dass** die Krankheiten durch die Pilze verursacht werden, ausgewählt aus Colletotrichum musae, Colletotrichum gloeosporioides, Colletotrichum coccodes; Fusarium semitectum, Fusarium moniliforme, Fusarium solani, Fusarium oxysporum; Verticillium theobromae; Nigrospora spp.; Botrytis cinerea; Geotrichum candidum; Phomopsis natalensis; Diplodia citri; Alternaria citri, Alternaria alternata; Phytophthora citrophthora, Phytophthora fragariae, Phytophthora cactorum, Phytophthora parasitica; Septoria depressa; Mucor piriformis; Monilinia fructigena, Monilinia laxa; Venturia inaequalis, Venturia pyrina; Rhizopus stolonifer, Rhizopus oryzae; Glomerella cingulata; Sclerotinia fruiticola; Ceratocystis paradoxa; Penicillium funiculosum, Penicillium expansum, Penicillium digitatum, Penicillium italicum; Gloeosporium album, Gloeosporium perennans, Gloeosporium fructigenum, Gloeosporium singulata; Phlyctaena vagabunda; Cylindrocarpon mali; Stemphyllium vesicarium; Phacydiopycnis malirum; Thielaviopsis paradoxy; Aspergillus niger, Aspergillus carbonarius; Nectria galligena; Pezicula spp.

10. Verfahren nach einem der Ansprüche 7 bis 9, **dadurch gekennzeichnet, dass** Obst und Gemüse ausgewählt sind aus Getreide, Rüben, Kern- und Steinobst und Beeren, Leguminosen, Ölpflanzen, Cucurbitaceae,
Faserpflanzen, Zitrusfrucht, tropischer Frucht, Gemüse, Brassicaceae, Avocado, Zimt, Kampferbaum, oder Mais, Tabak, Nüssen, Kaffee, Zuckerrohr, Tee, Weinreben, Hopfen, Kautschukpflanzen sowie Zierpflanzen, Sträuchern, Laubbäumen und immergrünen Bäumen.

11. Verfahren nach einem der Ansprüche 7 bis 10, **dadurch gekennzeichnet, dass** Obst und Gemüse ausgewählt sind aus Weizen, Gerste, Roggen, Hafer, Reis, Sorghum, Zuckerrübe, Futterrübe, Äpfeln, Birnen, Pflaumen, Pfirsichen, Mandeln, Kirschen, Erdbeeren, Himbeeren, Brombeeren, Bohnen, Linsen, Erbsen, Sojabohnen, Raps, Senf, Mohn, Olive, Sonnenblume, Kokosnuss, Rizinus, Kakao, Erdnüssen, Kürbissen, Gewürzgurken, Melonen, Salatgurken, Kürbisgewächsen, Baumwolle, Flachs, Hanf, Jute, Orange, Zitrone, Grapefruit, Mandarine, Papaya, Passionsfrucht, Mango, Karambole, Ananas, Banane, Spinat, Salat, Spargel, Kohl, Rüben, Karotten, Zwiebeln, Tomaten, Kartoffeln, scharfem und süßem Paprika, Avocado, Zimt, Kampferbaum, Mais, Tabak, Nüssen, Kaffee, Zuckerrohr, Tee, Weinreben, Hopfen, Kautschukpflanzen, Schnittblumen, Rosen, Gerbera und Blumenzwiebeln, Sträuchern, Koniferen.

12. Verfahren nach einem der Ansprüche 7 bis 11, **dadurch gekennzeichnet, dass** Obst und Gemüse ausgewählt sind aus Kern- und Steinobst und Beeren, insbesondere Äpfeln, Birnen, Pflaumen, Pfirsichen, Mandeln, Kirschen, Erdbeeren, Himbeeren und Brombeeren, Zitrusfrucht, insbesondere Orange, Zitrone, Grapefruit, Mandarine, tropischer Frucht, insbesondere Papaya, Passionsfrucht, Mango, Karambole, Ananas, Banane und Weinreben.

## Revendications

1. Utilisation d'au moins un fongicide, choisi parmi le fluopyram [(N-{2-[3-chloro-5-(trifluorométhyl)-pyridin-2-yl]éthyl}-2-(trifluorométhyl)benzamide)] et les sels de celui-ci,
pour le traitement en post-récolte de fruits, de fleurs coupées ou de légumes afin de protéger des fruits, des fleurs coupées ou des légumes récoltés contre des maladies de post-récolte et/ou de stockage.

2. Utilisation selon la revendication 1, **caractérisée en ce que** les maladies de post-récolte et/ou de stockage sont provoquées par les champignons choisis parmi
*Colletotrichum* spp., *Fusarium* spp., *Verticillium* spp., *Nigrospora* spp., *Botrytis* spp., *Geotrichum* spp., *Phomopsis* spp., *Diplodia* spp., *Alternaria* spp., *Phytophthora* spp., *Septoria* spp., *Mucor* spp., *Monilinia* spp., *Venturia* spp., *Rhizopus* spp., *Glomerella* spp., *Sclerotinia* spp., *Ceratocystis* spp., *Penicillium* spp., *Gloeosporium* spp., *Phlyctaena* spp., *Cylindrocarpon* spp., *Stemphyllium* spp., *Phacydiopycnis* spp., *Thielaviopsis* spp., *Aspergillus* spp., *Nectria* spp., *Pezicula* spp.

3. Utilisation selon les revendications 1 ou 2, **caractérisée en ce que** les maladies de post-récolte et de stockage sont provoquées par les champignons choisis parmi
*Colletotrichum musae, Colletotrichum gloeosporioides, Colletotrichum coccodes ; Fusarium semitectum, Fusarium moniliforme, Fusarium solani, Fusarium oxysporum ; Verticillium theobromae ; Nigrospora* spp. ; *Botrytis cinerea ; Geotrichum candidum ; Phomopsis natalensis ; Diplodia citri ; Alternaria citri, Alternaria alternata ; Phytophthora citrophthora, Phytophthora fra gariae, Phytophthora cactorum, Phytophthora parasitica ; Septoria depressa ; Mucor piriformis ; Monilinia fructigena, Monilinia laxa ; Venturia inaequalis, Venturia pyrina ; Rhizopus stolonifer, Rhizopus oryzae ; Glomerella cingulata ; Sclerotinia fruiticola ; Ceratocystis paradoxa ; Penicillium funiculosum, Penicillium expansum, Penicillium digitatum, Penicillium italicum ; Gloeosporium album, Gloeosporium perennans, Gloeosporium fructigenum, Gloeosporium singulata ; Phlyctaena vagabunda ; Cylindrocarpon mali ; Stemphyllium vesicarium ; Phacydiopycnis malirum ; Thielaviopsis paradoxy ; Aspergillus niger, Aspergillus carbonarius ; Nectria galligena ; Pezicula* spp.

4. Utilisation selon l'une quelconque des revendications 1 à 3, **caractérisée en ce que** les fruits et légumes sont choisis parmi les céréales, les tubercules, les fruits à pépins et à noyau et les baies, les légumineuses, les oléagineuses, les cucurbitacées, les plantes fibreuses, les agrumes, les fruits tropicaux, les légumes, les Brassicacées, l'avocat, la cannelle, le camphrier, ou le maïs, le tabac, les noix, le café, la canne à sucre, le thé, les vignes, les houblons, les ficus, ainsi que les plantes ornementales, les arbustes, les arbres à feuillage caduque et les arbres à feuillage persistant.

5. Utilisation selon l'une quelconque des revendications 1 à 4, **caractérisée en ce que** les fruits et légumes sont choisis parmi le blé, l'orge, le seigle, l'avoine, le riz, le sorgho, la betterave sucrière, la betterave fourragère, les pommes, les poires, les prunes, les pêches, les amandes, les cerises, les fraises, les framboises, les mûres, les haricots, les lentilles, les pois, les sojas, le colza, la moutarde, le pavot, l'olive, le tournesol, la noix de coco, le ricin, le cacao, les arachides, les potirons, les cornichons, les melons, les concombres, les courges, le coton, le lin, le chanvre, le jute, l'orange, le citron, le pamplemousse, la mandarine, la papaye, le fruit de la passion, la mangue, la carambole, l'ananas, la banane, l'épinard, la laitue, l'asperge, les choux, les navets, les carottes, les oignons, les tomates, les pommes de terre, les poivrons et les piments, l'avocat, la cannelle, le camphrier, le maïs, le tabac, les noix, le café, la canne à sucre, le thé, les vignes, les houblons, les ficus, les fleurs coupées, les roses, les gerberas et les bulbes à fleurs, les arbustes, les conifères.

6. Utilisation selon l'une quelconque des revendications 1 à 5, **caractérisée en ce que** les fruits et légumes sont choisis parmi les fruits à pépins et à noyau et les baies, en particulier les pommes, les poires, les prunes, les pêches, les amandes, les cerises, les fraises, les framboises et les mûres, les agrumes, en particulier l'orange, le citron, le pamplemousse, la mandarine, les fruits tropicaux, en particulier la papaye, le fruit de la passion, la mangue, la carambole, l'ananas, la banane et parmi les vignes.

7. Méthode de lutte contre des maladies de post-récolte et/ou de stockage par le traitement des fruits, des fleurs coupées ou des légumes par au moins un fongicide, choisi parmi le fluopyram [(N-{2-[3-chloro-5-(trifluorométhyl)pyridin-2-yl]éthyl}-2-(trifluoro-méthyl)benzamide)] et les sels de celui-ci,
après la récolte des fruits, des fleurs coupées ou des légumes.

8. Méthode selon la revendication 7, **caractérisée en ce que** les maladies sont provoquées par les champignons choisis parmi
*Colletotrichum* spp., *Fusarium* spp., *Verticillium* spp., *Nigrospora* spp., *Botrytis* spp., *Geotrichum* spp., *Phomopsis* spp., *Diplodia* spp., *Alternaria* spp., *Phytophthora* spp., *Septoria* spp., *Mucor* spp., *Monilinia* spp., *Venturia* spp., *Rhizopus* spp., *Glomerella* spp., *Sclerotinia* spp., *Ceratocystis* spp., *Pénicillium* spp., *Gloeosporium* spp., *Phlyctaena* spp., *Cylindrocarpon* spp., *Stemphyllium* spp., *Phacydiopycnis* spp., *Thielaviopsis* spp., *Aspergillus* spp., *Nectria* spp., et *Pezicula* spp.

9. Méthode selon la revendication 7 ou 8, **caractérisée en ce que** les maladies sont provoquées par les champignons choisis parmi
*Colletotrichum musae, Colletotrichum gloeosporioides, Colletotrichum coccodes ; Fusarium semitectum, Fusarium moniliforme, Fusarium solani, Fusarium oxysporum ; Verticillium theobromae ; Nigrospora* spp. ; *Botrytis cinerea ; Geotrichum candidum ; Phomopsis natalensis ; Diplodia citri ; Alternaria citri, Alternaria alternata ; Phytophthora citrophthora, Phytophthora fragariae, Phytophthora cactorum, Phytophthora parasitica ; Septoria depressa ; Mucor piriformis ; Monilinia fructigena, Monilinia laxa ; Venturia inaequalis, Venturia pyrina ; Rhizopus stolonifer, Rhizopus oryzae ; Glomerella cingulata ; Sclerotinia fruiticola ; Ceratocystis paradoxa ; Penicillium funiculosum, Penicillium expansum, Penicillium digitatum, Penicillium italicum ; Gloeosporium album, Gloeosporium perennans, Gloeosporium fructigenum, Gloeosporium singulata ; Phlyctaena vagabunda ; Cylindrocarpon mali ; Stemphyllium vesicarium ; Phacydiopycnis malirum ; Thielaviopsis paradoxy ; Aspergillus niger, Aspergillus carbonarius ; Nectria galligena ; Pezicula* spp.

10. Méthode selon l'une quelconque des revendications 7 à 9, **caractérisée en ce que** les fruits et légumes sont choisis parmi les céréales, les tubercules, les fruits à pépins et à noyau et les baies, les légumineuses, les oléagineuses, les cucurbitacées, les plantes fibreuses, les agrumes, les fruits tropicaux, les légumes, les Brassicacées, l'avocat, la cannelle, le camphrier, ou le maïs, le tabac, les noix, le café, la canne à sucre, le thé, les vignes, les houblons, les ficus, ainsi que les plantes ornementales, les arbustes, les arbres à feuillage caduque et les arbres à feuillage persistant.

11. Méthode selon l'une quelconque des revendications 7 à 10, **caractérisée en ce que** les fruits et légumes sont choisis parmi le blé, l'orge, le seigle, l'avoine, le riz, le sorgho, la betterave sucrière, la betterave fourragère, les pommes, les poires, les prunes, les pêches, les amandes, les cerises, les fraises, les framboises, les mûres, les haricots, les lentilles, les pois, les sojas, le colza, la moutarde, le pavot, l'olive, le tournesol, la noix de coco, le ricin, le cacao, les arachides, les potirons, les cornichons, les melons, les concombres, les courges, le coton, le lin, le chanvre, le jute, l'orange, le citron, le pamplemousse, la mandarine, la papaye, le fruit de la passion, la mangue, la carambole, l'ananas, la banane, l'épinard, la laitue, l'asperge, les choux, les navets, les carottes, les oignons, les tomates, les pommes de terre, les poivrons et les piments, l'avocat, la cannelle, le camphrier, le maïs, le tabac, les noix, le café, la canne à sucre, le thé, les vignes, les houblons, les ficus, les fleurs coupées, les roses, les gerberas et les bulbes à fleurs, les arbustes, les conifères.

12. Méthode selon l'une quelconque des revendications 7 à 11, **caractérisée en ce que** les fruits et légumes sont choisis parmi les fruits à pépins et à noyau et les baies, en particulier les pommes, les poires, les prunes, les pêches, les amandes, les cerises, les fraises, les framboises et les mûres, les agrumes, en particulier l'orange, le citron, le pamplemousse, la mandarine, les fruits tropicaux, en particulier la papaye, le fruit de la passion, la mangue, la carambole, l'ananas, la banane et parmi les vignes.
